# EUROPÄISCHE PATENTSCHRIFT

(11) **EP 2 604 321 B1**
(45) Veröffentlichungstag und Bekanntmachung des Hinweises auf die Patenterteilung: **09.03.2016**
(21) Anmeldenummer: 12197262.4
(22) Anmeldetag: 14.12.2012
(51) Int. Cl.: B01D 29/21, B01D 29/96, B01D 35/153, B01D 35/16

(54) **Filtereinrichtung**
Filter device
Dispositif de filtre

(30) Priorität: 15.12.2011 DE 102011088742
(43) Veröffentlichungstag der Anmeldung: 19.06.2013
(73) Patentinhaber: MAHLE International GmbH, 70376 Stuttgart (DE)
(72) Erfinder: AUER, Sabrina, 73728 Esslingen (DE); GENC, Engin, 71332 Waiblingen (DE); KIEMLEN, Ralf, 72760 Reutlingen (DE)
(74) Vertreter: BRP Renaud & Partner mbB Rechtsanwälte Patentanwälte Steuerberater

(56) Entgegenhaltungen:
- DE-A1-102009 049 868

## Beschreibung

Die vorliegende Erfindung betrifft ein Ringfilterelement gemäß dem Oberbegriff des Anspruchs 1 und eine zugehörige Filtereinrichtung, insbesondere ein Öl- oder Kraftstofffilter, mit einem, einen Filtergehäusetopf und einen Filtergehäusedeckel aufweisenden Filtergehäuse.

Bei manchen Filtereinrichtungen ist zur Sicherstellung der Verwendung eines autorisierten Ringfilterelements an diesem oftmals ein axial von einer unteren Endscheibe abstehender Pin angeordnet, mittels welchem das Ringfilterelement bei montierter Filtereinrichtung in einen filtergehäusetopfseitigen Kanal eingreift und eine Inbetriebnahme der Filtereinrichtung ausschließlich dann ermöglicht, sofern das verwendete Ringfilterelement den erforderlichen Pin an der richtigen Stelle aufweist. Hierdurch können insbesondere Schäden am Verbrennungsmotor verhindert werden. Als schwierig hat sich bei derartigen Filtereinrichtungen jedoch oftmals die Montage des Ringfilterelements im Filtergehäuse erwiesen.

Das Dokument DE 10 2009 049 868 A1 offenbart eine Filtereinrichtung, mit einem, einen Filtergehäusetopf und einen Filtergehäusedeckel aufweisenden Filtergehäuse, in welchem ein Ringfilterelement angeordnet ist, das an einer unteren Endscheibe einen axial abstehenden Pin aufweist, mittels welchem es bei montierter Filtereinrichtung in einen Filtergehäusetopfseitigen kanal eingreift.

Die vorliegende Erfindung beschäftigt sich deshalb mit dem Problem, für ein Ringfilterelement der gattungsgemäßen Art, eine verbesserte oder zumindest eine alternative Ausführungsform anzugeben, welche einerseits konstruktiv einfach aufgebaut ist und andererseits eine Montage erleichtert.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, ein aus mehreren Einzelteilen zusammengesetztes Ringfilterelement, welches für einen Gebrauch in einer speziell dafür ausgebildeten Filtereinrichtung ausgebildet ist, mit einem Schlüsselschlosssystem auszustatten, sodass die für den späteren Einbau des Ringfilterelements in die Filtereinrichtung relevanten Bauteile exakt und zugleich einfach zueinander positioniert werden können. Das erfindungsgemäße Ringfilterelement, welches bspw. als Öl- oder Kraftstofffilterelement ausgebildet sein kann, umfasst dabei in bekannter Weise ein faltenstemförmiges Material, eine Zarge sowie eine obere und eine untere Endscheibe. Die Zarge ist dabei orthogonal zwischen den beiden Endscheiben angeordnet und dient zusätzlich als Stützkontur für das faltensternförmige Filtermaterial. An der unteren Endscheibe ist ein axial abstehender Pin angeordnet, wogegen an der Zarge zusätzlich ein Führungselement vorgesehen ist. Der axial abstehende Pin greift bei einer Montage des erfindungsgemäßen Ringfilterelements in eine zugehörige Filtereinrichtung in einen filtergehäusetopfseitigen Kanal ein, bspw. in einen Leerlaufkanal, und dichtet diesen dadurch bei korrekt montiertem Ringfilterelement ab. Um dabei das Einführen des endscheibenseitigen Pins in den filtergehäusetopfseitigen Kanal zu erleichtern, ist an der Zarge ein Führungselement angeordnet, welches mit einer an einem rohrförmigen Dom des Filtergehäuses angeordneten Führungskontur zusammenwirkt. Greift somit das zargenseitige Führungselement in die domseitige Führungskontur ein, so ist der endscheibenseitige Pin fluchtend zum filtergehäusetopfseitigen Kanal ausgerichtet. Um eine Ausrichtung des zargenseitigen Führungselements relativ zum endscheibenseitigen Pin zu erleichtern, sind nun erfindungsgemäß an der Zarge des Ringfilterelements eine Schlüsselkontur und an der unteren Endscheibe des Ringfilterelements zumindest eine zugehörige Schlosskontur vorgesehen, oder umgekehrt, sodass ausschließlich eine einzige Zusammenbauposition möglich ist, in der das Führungselement und der Pin definiert zueinander ausgerichtet sind. In dieser definiert zueinander ausgerichteten Lage ist später auch ein einfaches Einführen des endscheibenseitigen Pins in den filtergehäusetopfseitigen Kanal möglich, sofern das zargenseitige Führungselement in die zugehörige Führungskontur eingreift. Durch das zwischen der Zarge und der unteren Endscheibe verwirklichte Schlüssel-Schloss-System kann eine richtige und lageexakte Montage des Ringfilterelements deutlich erleichtert werden.

Bei einer vorteilhaften Ausbildung der erfindungsgemäßen Lösung ist die zargenseitige Schlüsselkontur als Zargenpin ausgebildet, der axial von der Zarge absteht und der in eine zugehörige Ausnehmung an der unteren Endscheibe eingreift. Die zugehörige Ausnehmung ist dabei sozusagen als Zargenpinloch ausgebildet und definiert bei einem Eingreifen des Zargenpins eine eindeutige Lage der Zarge relativ zur unteren Endscheibe. Alternativ hierzu kann die endscheibenseitige Schlüsselkontur auch als Zargensegment ausgebildet sein, welches in eine zugehörige Aussparung an der Zarge eingreift. In diesem Fall sind somit der Schlüssel an der unteren Endscheibe und das zugehörige Schloss an der Zarge ausgebildet. Beide alternativen Ausführungsformen sind konstruktiv vergleichsweise einfach auszuführen und können dadurch fertigungstechnisch einfach und zudem kostengünstig hergestellt werden.

An der unteren Endscheibe ist eine Positionierkontur, in der Art einer radialen Ausbuchtung, vorgesehen. Diese Positionierkontur bewirkt bei einem Verdrehen des erfindungsgemäßen Ringfilterelements einen Stopp genau in derjenigen Lage, in welcher der axial von der unteren Endscheibe abstehende Pin zum filtergehäusetopfseitigen Kanal, insbesondere zum dort angeordneten Leerlaufkanal, fluchtet. Die Positionierkontur erfüllt somit bspw. die Funktion einer bisher an einem Boden des Filtergehäusetopfes angeordneten Rampe, auf welcher der axial von der unteren Endscheibe abstehende Pin solange entlang geglitten ist, bis er am Ende der Rampe in den filtergehäusetopfseitigen Kanal eingesteckt werden konnte.

Die vorliegende Erfindung beruht weiter auf dem allgemeinen Gedanken, eine Filtereinrichtung anzugeben, bspw. in der Art eines Öl- oder Kraftstofffilters, mit einem einen Filtergehäusetopf und einen damit verschraubbaren Filtergehäusedeckel aufweisenden Filtergehäuse, in welchem ein zuvor beschriebenes, erfindungsgemäßes Ringfilterelement angeordnet ist. Dieses Ringfilterelement greift dabei bei montierter Filtereinrichtung mit seinem axial abstehenden Pin in den filtergehäusetopfseitigen Kanal ein, der bspw. als Leerlaufkanal ausgebildet ist, und ermöglicht in dieser Lage überhaupt erst einen Betrieb der Filtereinrichtung. Am Filtergehäusetopf ist zusätzlich ein rohrförmiger Dom vorgesehen, der bei montierter Filtereinrichtung in einen Innenraum des Ringfilterelements, d. h. also in die Zarge desselben, eingreift, wobei an einem freien Ende dieses rohrförmigen Doms eine Führungskontur vorgesehen ist, die mit dem an der Zarge angeordneten Führungselement zusammenwirkt. Das Ringfilterelement und die zugehörige Filtereinrichtung besitzen somit insgesamt drei Schlüssel-Schloss-Systeme, nämlich ein erstes zwischen der Zarge und der unteren Endscheibe, ein zweites zwischen dem zargenseitigen Pin und der domseitigen Führungskontur und ein drittes zwischen dem endscheibenseitigen Pin und dem filtergehäusetopfseitigen Kanal. Hierdurch kann sichergestellt werden, dass die Gefahr von Schäden minimiert wird.

Bei einer vorteilhaften Weiterbildung der erfindungsgemäßen Lösung weist die domseitige Führungskontur eine Axialnut auf, zu welcher das Führungselement bei der Montage der Filtereinrichtung hingeführt wird, und die relativ zu dem ringfilterelementseitigen Pin derart angeordnet ist, dass dieser in den filtergehäusetopfseitigen Kanal eingeführt wird, sofern das Führungselement in die Axialnut eintritt. Diese genaue Ausrichtung des Pins relativ zum Führungselement und das Zusammenwirken des Führungselements mit der domseitigen Führungskontur bewirkt, dass ausschließlich autorisierte Ringfilterelemente in die Filtereinrichtung eingesetzt werden können, nicht hingegen andere Ringfilterelemente, die bspw. keinen Pin aufweisen. Bei diesen wird der filtergehäusetopfseitige Kanal nicht verschlossen und eine das Ringfilterelement umgehende Bypassströmung ermöglicht, die die Filterwirkung der Filtereinrichtung stark reduziert. Bei der Verwendung von Ringfilterelementen mit Pin, muss sowohl das Führungselement als auch ein Abstand zwischen diesem und dem Pin genau vordefinierten Maßen entsprechen, damit bei einem Zusammenwirken des Führungselements mit der domseitigen Führungskontur der Pin auch in den filtergehäusetopfseitigen Kanal eintritt, sofern das Führungselement in die Axialnut der Führungskontur geschoben wird. Generell ist somit die Verwendung von nicht autorisierten Ringfilterelementen zumindest stark erschwert, wodurch Schädigungen an einem mit der Filtereinrichtung verbundenen Verbrennungsmotor reduziert bzw. gänzlich ausgeschlossen werden können.

Bei einer vorteilhaften Weiterbildung der erfindungsgemäßen Lösung ist die Führungskontur am Dom in der Art einer kreisförmigen Rampe ausgebildet, wobei die Axialnut zwischen der höchsten und der tiefsten Stelle der Rampe angeordnet ist. Bei einem Aufsetzen des Ringfilterelements gleitet dieses somit mit seinem Führungselement entlang der kreisförmigen Rampe bis es die Axialnut erreicht und in diese eingeschoben werden kann. Dieser Einschiebe- bzw. Gleitvorgang kann dabei bspw. mittels eines Aufschraubvorgangs des Filtergehäusedeckels auf dem Filtergehäusetopf erzeugt werden. Alternativ ist auch denkbar, dass die Führungskontur am Dom in der Art einer abgeschrägten Kanüle ausgebildet ist, wobei an der tiefsten Stelle die Axialnut angeordnet ist. In diesem Fall kann ebenfalls ein besonders leichtgängiges Zuführen des Führungselements zur Axialnut und damit ein besonders leichtgängiges Zuführen des Pins zum filtergehäusetopfseitigen Kanal erreicht werden. Im Unterschied zu aus dem Stand der Technik bekannten Filtereinrichtungen, bei welchen der ringfilterelementseitige Pin oftmals als Gleitelement benutzt wurde, muss der erfindungsgemäße Pin eine derartige Gleiteigenschaft nicht mehr aufweisen.. Der rohrförmige Dom am Filtergehäusetopf kann dabei bspw. einen Teil eines Reinkanals bilden.

Generell weist die Zarge auf dem Kreissegment eine rillierte Struktur auf, die dazu dient das Filtermedium, beispielsweise Filterpapier, rutschsicher zu der Zarge anzuordnen. Ferner wird das Filtermedium entweder mit den beiden Endscheiben durch Kleben oder Ultraschall oder andere Verfahren verbunden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1a: eine erfindungsgemäße Zarge mit einer Aussparung,
- Fig. 1b: eine zur Fig. 1a zugehörige untere Endscheibe mit einem axial abstehenden Zargenelement,
- Fig. 1c: die mit der Zarge verbundene untere Endscheibe,
- Fig. 2a: eine weitere mögliche Ausführungsform einer Zarge mit einem axial abstehenden Zargenpin,
- Fig. 2b: eine zur Fig. 2a zugehörige untere Endscheibe,
- Fig. 3a: eine mit der in Fig. 2b gezeigten unteren Endscheibe montierte Zarge,
- Fig. 3b: eine Schnittdarstellung durch Fig. 3a,
- Fig. 4a: eine weitere mögliche Ausführungsform einer erfindungsgemäßen Zarge,
- Fig. 4b: zu der in der Fig. 4a gezeigten Zarge zugehörige Endscheibe,
- Fig. 5: eine mit der in Fig. 4b gezeigten Endscheibe montierte Zarge gemäß Fig. 4a,
- Fig. 6: eine Schnittdarstellung durch eine erfindungsgemäße Filtereinrichtung in einer Einbausituation.

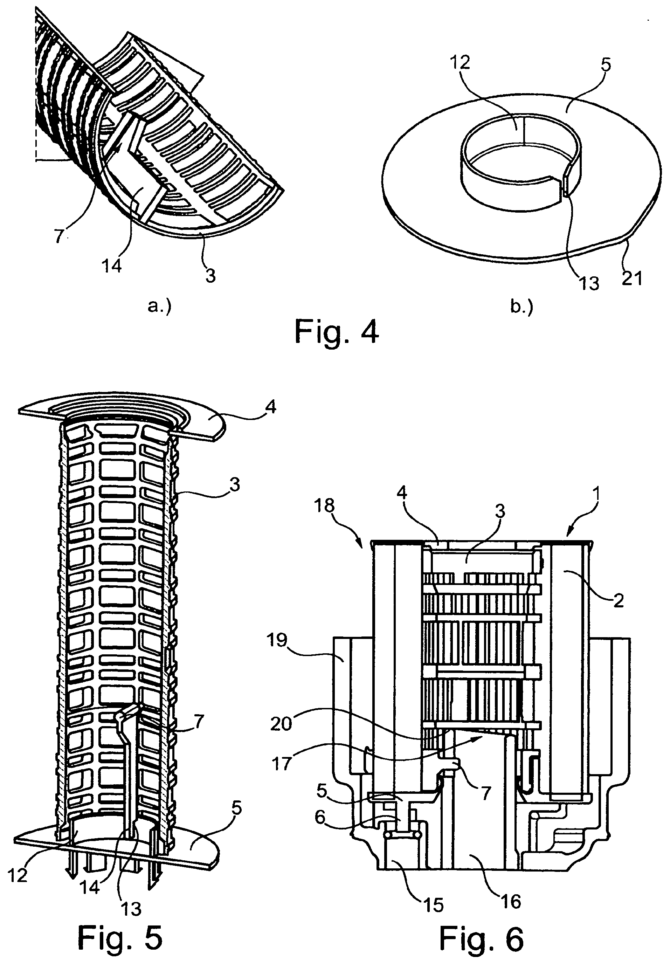

Die Fig. 6 zeigt eine stehend angeordnete Filtereinrichtung 18, die einen gehäuseseitigen Dom 20 und einen gehäuseseitigen Leerlauf 15 aufweist. Nicht gezeigt, aber erforderlich ist ein Deckel, der die Filtereinrichtung 18 dicht verschließt. Alternativ kann die Filtereinrichtung 18 auch hängend angeordnet sein, so dass sinnvollerweise der Leerlauf 15 in den Deckel integriert ist, aber nicht der Dom und die Reinseite 16. Die Zuordnung obere und untere Endscheibe 4 und 5 erfolgt an Hand der stehenden Ausführungsform, ist aber im Falle einer hängenden Filtereinrichtung 18 genau anders herum.

Dementsprechend geht es in dieser Anmeldung um die sichere Zuordnung der Zarge 3 und ihrem Führungselement 7 zum Dom 20 und der jeweiligen Endscheibe 4 oder 5, die den Pin 6 trägt, um den Leerlauf 15 im Betrieb dicht zu verschließen.

Entsprechend der Fig. 6, umfasst ein erfindungsgemäßes Ringfilterelement 1, das bspw. als Öl- oder Kraftstofffilterelement ausgebildet ist, ein faltensternförmiges Filtermaterial 2, eine stützkonturartig ausgebildete und rillierte Zarge 3 sowie eine obere Endscheibe 4 und eine untere Endscheibe 5, wobei an der unteren Endscheibe 5 ein axial abstehender Pin 6 und an der Zarge 3 ein Führungselement 7 angeordnet sind. Erfindungsgemäß sind nun an der Zarge 3 eine Schlüsselkontur und an der unteren Endscheibe 5 eine zugehörige Schlosskontur vorgesehen, oder umgekehrt, sodass ausschließlich eine einzige mögliche Zusammenbauposition gegeben ist, in der das zargenseitige Führungselement 7 und der endscheibenseitige Pin 6 in einer exakt definierten Lage zueinander ausgerichtet sind.

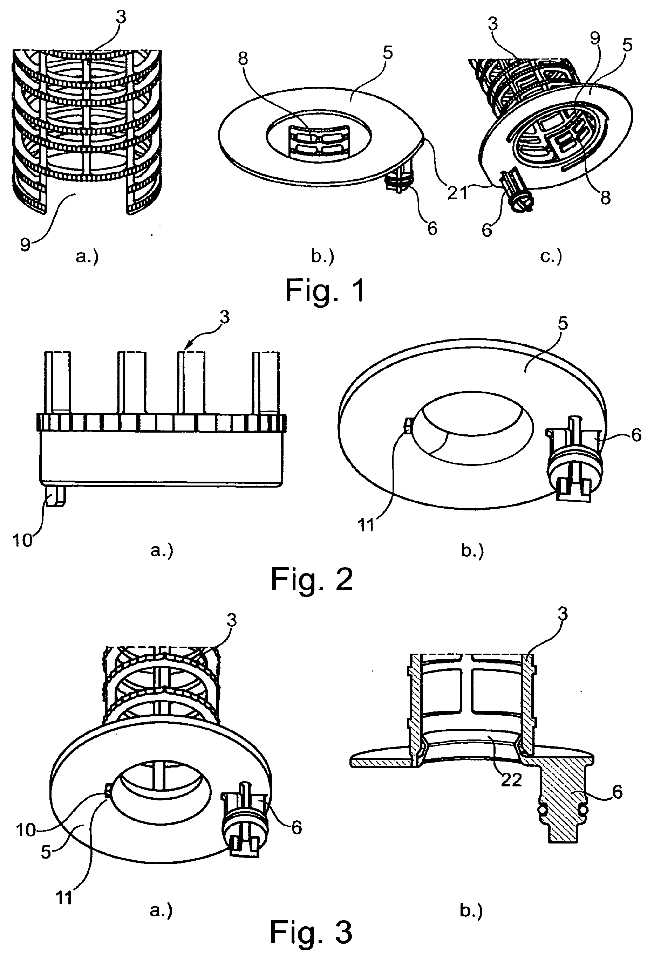

Gemäß der Fig. 1b kann dabei die endscheibenseitige Schlüsselkontur bspw. als Zargensegment 8 ausgebildet sein, welches in eine zugehörige Aussparung 9 (vgl. Fig. 1a) an der Zarge 3 eingreift. In diesem Fall sind somit die Schlüsselkontur an der Endscheibe 5 und die zugehörige Schlosskontur an der Zarge 3 angeordnet. Selbstverständlich ist dies auch umgekehrt denkbar, wie dies bspw. gemäß den Fig. 2 und 3 dargestellt ist. Gemäß den Fig. 2 und 3 ist dabei die Schlüsselkontur als zargenseitiger Zargenpin 10 ausgebildet, der in eine zugehörige Ausnehmung 11 (vgl. die Fig. 2b sowie 3a und 3b) dichtend eingreift.

Die Fig. 4 und 5 gehören zu der Ausführungsform, bei der die Filtereinrichtung 18 hängend angeordnet ist. Daher trägt die in diesen Darstellungen die untere Endscheibe 5 den Pin 6 und Rasthaken 19, mit denen das Ringfilterelement 1 am Deckel verrastet wird. Die Endscheibe 5 ist geschnitten dargestellt und der zugehörige Pin 6 ist nicht zusehen. Desweiteren ist die zum Deckel weisende Endscheibe 5 geschlossen, um den Reinraum vom Rohraum zu trennen. Der Leerlauf 15 ist auf der Rohseite angeordnet, da der Leerlauf 15 die Filtereinrichtung 18 mit dem Fluidreservoir der zu filternden Flüssigkeit verbindet. In diesem Ausführungsbeispiel dient eine Verlängerung der Führungselementes 7 der Positionierung der Endscheibe 5 mit Pin relativ zur Zarge 3.

Betrachtet man die Fig. 4 und 5, so kann man erkennen, dass an der unteren Endscheibe 5 ein in Richtung der Zarge 3 abstehender Kragen 12 angeordnet ist, der einen Axialschlitz 13 besitzt. An der Zarge 3 ist dabei eine zugehörige und radial nach innen stehende Rippe 14 ausgebildet, die bei montiertem Ringfilterelement 1 in den Axialschlitz 13 des endscheibenseitigen Kragens 12 eingreift. Sowohl das Zargensegment 8, als auch der Zargenpin 10 sowie die zugehörigen Aussparungen/Ausnehmungen 9, 11 und Axialschlitz 13 bzw. zugehörige Rippe 14 bewirken dabei eine eindeutige Ausrichtung der Zarge 3 relativ zur Endscheibe 5 und damit eine exakte Ausrichtung des zargenseitigen Führungselements 7 relativ zum endscheibenseitigen Pin 6. Das Ringfilterelement 1 kann demzufolge in ausschließlich einer einzigen möglichen Zusammenbauposition montiert werden, bei welcher das Führungselement 7 und der Pin 6 derart zueinander ausgerichtet sind, dass das Führungselement 7 entlang einer an einem Dom 16 angeordneten Führungskontur 17 entlanggleitet und in eine Axialnut 20 der Führungskontur 17 eingreift, wobei in dieser Stellung dann der endscheibenseitige Pin 6 in einen Kanal 15, bspw. einen Leerlaufkanal, eingreift. Wobei hier der Leerlaufkanal 15 in dem nicht gezeigten Deckel angordnet ist. Die am Dom 20 anliegende Endscheibe 4 oder 5 weist eine Dichtungskontur gegenüber dem Dom 20 auf um die Reinseite von der Rohseite zu trennen. Vorzugsweise wird das Filterlement 1 von außen nach innen von dem zu reinigen den Fluid durchströmt. Der Dom 20 kann direkt Teil des Filtergehäuses sein oder als separates Einbauteil, als Funktionsträger, ausgebildet sein. Dieser Funktionsträger kann auch den Leerlaufkanal 15 enthalten und weitere andere Funktionen wie Ventile etc. enthalten.

Die gemäß der Fig. 6 dargestellte Filtereinrichtung 18, die bspw. als Öl- oder Kraftstofffilter ausgebildet sein kann, weist somit einen Filtergehäusetopf 19 auf, in dem das erfindungsgemäße Ringfilterelement 1 angeordnet ist. Das Ringfilterelement 1 greift dabei in seinem axial abstehenden Pin 6 bei montierter Filtereinrichtung 18 in den filtergehäusetopfseitigen Kanal 15, bspw. einen Leerlaufkanal, ein und verschließt diesen, wodurch eine das Ringfilterelement 1 umgehende Bypassströmung ausgeschlossen wird. Am Filtergehäusetopf 19 ebenfalls angeordnet ist der Dom 16, der bei montierter Filtereinrichtung 18 in einen Innenraum des Ringfilterelements 1 eingreift, wobei am freien Ende des rohrförmigen Doms 16 die zuvor erwähnte Führungskontur 17 angeordnet ist, die mit dem am Ringfilterelement 1, genauer gesagt an der Zarge 3, angeordneten Führungselement 7, zusammenwirkt. Die domseitige Führungskontur 17 weist dabei die Axialnut 20 auf, zu welcher das Führungselement 7 bei der Montage der Filtereinrichtung 18 über die Führungskontur 17 hingeführt wird und die relativ zum Pin 6 derart angeordnet ist, dass dieser in den filtergehäusetopfseitigen Kanal 15 ausschließlich dann einführbar ist, sofern das Führungselement 7 in die Axialnut 20 der Führungskontur 17 eintritt. Das Führungselement 7 ist dabei als ein radial nach innen gerichteter Führungspin ausgebildet.

Zusätzlich ist die Führungskontur 17 in der Art einer kreisförmigen Rampe ausgebildet, wobei die Axialnut 20 zwischen der höchsten und der tiefsten Stelle der Rampe oder aber an der tiefsten Stelle der Rampe angeordnet sein kann. Die Führungskontur 17 kann insbesondere auch in der Art einer abgeschrägten Kanüle ausgebildet sein, wobei dann die Axialnut 20 an der tiefsten Stelle angeordnet ist.

Betrachtet man die untere Endscheibe 5 gemäß den Figuren 1b, 1c und 4b weiter, so kann man erkennen, dass an dieser eine Positionierkontur 21 angeordnet sein kann, die bspw. in der Art einer radialen Ausbuchtung bzw. Positioniernase, ausgebildet ist. Die Positionierkontur 21 kann ebenso in der Art eines Anschlags wirken und dadurch mit einer nicht gezeigten und am Filtergehäusetopf 19 angeordneten Gegenkontur zusammenwirken, wobei die Positionierkontur 21 eine Ausrichtung des Pins 6 relativ zum Kanal 15, d. h. insbesondere eine fluchtende Ausrichtung, bewirkt. An der unteren Endscheibe 5 kann darüber hinaus eine Dichtlippe 22 angeordnet sein (vgl. Fig. 3b), die dichtend am Dom 16 anliegt und dabei in die Zarge 3 eingreift.
Mit der erfindungsgemäßen Filtereinrichtung 18 und insbesondere auch mit dem erfindungsgemäßen Ringfilterelement 1 kann die Montage des Ringfilterelements 1 erleichtert und dadurch eine hohe Filterqualität gewährleistet werden.

Selbstverständlich können die aufgezeigten Schlüsselschlosssysteme zwischen Zarge 3 und Endscheibe 4 oder 5 jeweils in einer stehenden, liegenden oder hängenden Filtereinrichtung 18 zum Einsatz kommen.

Die hier gezeigten Ausführungsbeispiele sind beliebig miteinander kombinierbar. z.B. ist die Lösung aus Fig. 4 auf eine Anwendung wie in Fig. 2 übertragbar und umgekehrt.

## Patentansprüche

1. Ringfilterelement (1), insbesondere ein Öl- oder Kraftstofffilterelement, umfassend einen faltensternförmigen Filtermaterial (2), eine Zarge (3) sowie eine obere Endscheibe (4) und eine untere Endscheibe (5), wobei an der unteren Endscheibe (5) ein axial abstehender Pin (6) und an der Zarge (3) ein Führungselement (7) vorgesehen sind, wobei an der Zarge (3) eine Schlüsselkontur und an der unteren Endscheibe (5) zumindest eine zugehörige Schlosskontur vorgesehen sind, oder umgekehrt, so dass ausschließlich eine einzige Zusammenbauposition gegeben ist, in der das Führungselement (7) und der Pin (6) definiert zueinander ausgerichtet sind,
**dadurch gekennzeichnet,**
**dass** an der unteren Endscheibe (5) eine Positionierkontur (21), in der Art einer radialen Ausbuchtung, vorgesehen ist.

2. Ringfilterelement nach Anspruch 1,
**dadurch gekennzeichnet,**
**dass** die zargenseitige Schlüsselkontur als Zargenpin (10) ausgebildet ist, der in eine zugehörige Ausnehmung (11) an der unteren Endscheibe (5) eingreift.

3. Ringfilterelement nach Anspruch 1,
**dadurch gekennzeichnet,**
**dass** die endscheibenseitige Schlüsselkontur als Zargensegment (8) ausgebildet ist, welches in eine zugehörige Aussparung (9) an der Zarge (3) eingreift.

4. Ringfilterelement nach Anspruch 1,
**dadurch gekennzeichnet,**
- **dass** an der unteren Endscheibe (5) ein in Richtung der Zarge (3) abstehender Kragen (12) angeordnet ist, der einen Axialschlitz (13) aufweist,
- **dass** an der Zarge (3) eine radial nach innen stehende Rippe (14) ausgebildet ist, die bei montiertem Ringfilterelement (1) in den Axialschlitz (13) des endscheibenseitigen Kragens (12) eingreift.

5. Ringfilterelement nach einem der Ansprüche 1 bis 4,
**dadurch gekennzeichnet,**
**dass** an der unteren Endschiebe (5) eine Dichtlippe (22) angeordnet ist, die dichtend in die Zarge (3) eingreift.

6. Filtereinrichtung (18), insbesondere ein Öl- oder Kraftstofffilter, mit einem, einen Filtergehäusetopf (19) und einen Filtergehäusedeckel aufweisenden Filtergehäuse, in welchem ein Ringfilterelement (1) nach einem der vorhergehenden Ansprüche angeordnet ist, wobei
- das Ringfilterelement (1) mit seinem axial abstehenden Pin (6) bei montierter Filtereinrichtung (18) in einen filtergehäusetopfseitigen Kanal (15) eingreift,
- am Filtergehäusetopf (19) ein rohrförmiger Dom (16) vorgesehen ist, der bei montierter Filtereinrichtung (1) in einen Innenraum des Ringfilterelements (1) eingreift,
- an einem freien Ende des rohrförmigen Doms (16) eine Führungskontur (17) vorgesehen ist, die mit dem am Ringfilterelement (1) angeordneten Führungselement (7) zusammenwirkt.

7. Filtereinrichtung nach Anspruch 6,
**dadurch gekennzeichnet,**
**dass** die domseitige Führungskontur (17) eine Axialnut (20) aufweist, zu welcher das Führungselement (7) bei der Montage der Filtereinrichtung (18) hingeführt wird, und die relativ zum Pin (6) so angeordnet ist, dass dieser in den filtergehäusetopfseitigen Kanal (15) einführbar ist, sofern das Führungselement (7) in die Axialnut (20) eintritt.

8. Filtereinrichtung nach Anspruch 6 oder 7,
**dadurch gekennzeichnet,**
**dass** das Führungselement (7) als ein radial nach innen gerichteter Führungspin ausgebildet ist.

9. Filtereinrichtung nach Anspruch 7 oder 8,
**dadurch gekennzeichnet,**
- **dass** die Führungskontur (17) in der Art einer kreisförmigen Rampe ausgebildet ist, wobei die Axialnut (20) zwischen der höchsten und der tiefsten Stelle der Rampe angeordnet ist,
- **dass** die Führungskontur (17) in der Art einer abgeschrägten Kanüle ausgebildet ist, wobei an der tiefsten Stelle die Axialnut (20) angeordnet ist.

## Claims

1. Ring filter element (1), more particularly an oil or fuel filter element, comprising a folded star-shaped filter material (2), a frame (3) as well as an upper end disk (4) and a lower end disk (5), wherein an axially projecting pin (6) is provided on the lower end disk (5) and a guide element (7) is provided on the frame (3), wherein on the frame (3) an key contour is envisaged and on the lower end disk (5) at least one associated lock contour, or vice-versa, so that only one assembly position is defined, in which the guide element (7) and the pin (6) are aligned in a defined manner with regard to each other,
**characterised in that**
on the lower end disk (5) a positioning contour (21) in the form of a radial protrusion is provided.

2. Ring filter element according to claim 1
**characterised in that**
the key contour on the frame side is designed as a frame pin (10) which engages in a corresponding recess (11) on the lower end disk (5).

3. Ring filter element according to claim 1
**characterised in that**
the key contour on the end disk size is designed as a frame segment (8) which engages in a corresponding recess (9) on the frame (3).

4. Ring filter element according to claim 1
**characterised in**
- **that** arranged on the lower end disk (5) is a collar (12) which projects in the direction of the frame (3) and has an axial slit (13),
- **that** formed on the frame (3) is a radially inwardly projecting rib (14), which when the ring filter element (1) is mounted engages in the axial slit (13) of the collar (12) on the end disk side.

5. Ring filter element according to any one of claims 1 to 4
**characterised in that**
arranged on the lower end disk (5) is a sealing lip (22) which engages in the frame (3) in a sealing manner.

6. Filter device (18), more particularly an oil or fuel filter, with a filter housing which has a filter housing pot (19) and a filter housing cover and in which a ring filter element (1) according to any one of the preceding elements is arranged, wherein
- when the filter device (18) is mounted, the ring filter element (1) engages with its axially projecting pin (6) in a channel (15) on the filter housing pot side,
- on the filter housing point (19) a tubular mandrel (16) is provided which when the filter device (1) is mounted engages in an interior space of the ring filter element (1),
- at a free end of the tubular mandrel (16) a guide contour (17) is provided which interacts with the guide element (7) arranged on the ring filter element (1).

7. Ring filter device according to claim 6
**characterised in that**
the guide structure (17) on the mandrel side has an axial groove (20) to which on assembling the filter device (18) the guide element (7) is guided and which is arranged relative to the pin (6) so that the latter can be introduced into the channel (15) on the filter housing pot side if the guide element (7) enters the axial groove (20).

8. Filter element according to claim 6 or 7
**characterised in that**
the guide element (7) is designed as radially inwardly directed guide pin.

9. Filter element according to claim 7 or 8
**characterised in**
- **that** the guide contour (17) is designed in the form of a circular ramp, wherein the axial groove (20) is arranged between the highest and lowest point of the ramp,
- **that** the guide contour (17) is designed in the form of a bevelled cannula, wherein the axial groove (20) is arranged at the lowest point.

## Revendications

1. Élément de filtre annulaire (1), notamment élément de filtre à huile ou à carburant, comprenant un matériau de filtre (2) plié en étoile, un cadre (3) ainsi qu'un disque terminal supérieur (4) et un disque terminal inférieur (5), une broche (6) s'écartant de façon axiale étant prévue sur le disque terminal inférieur (5) et un élément de guidage (7) étant prévu sur le cadre (3), un contour en clé étant prévu sur le cadre (3) et au moins un contour en serrure associé étant prévu sur le disque terminal inférieur (5), ou inversement, de telle sorte qu'il existe une seule position de montage dans laquelle l'élément de guidage (7) et la broche (6) sont orientés de manière définie l'un par rapport à l'autre, **caractérisé en ce qu'**un contour de positionnement (21) à la manière d'une bosse radiale est prévu sur le disque terminal inférieur (5).

2. Élément de filtre annulaire selon la revendication 1, **caractérisé en ce que** le contour en clé côté cadre est conçu comme une broche de cadre (10) qui pénètre dans un évidement associé (11) sur le disque terminal inférieur (5).

3. Élément de filtre annulaire selon la revendication 1, **caractérisé en ce que** le contour en clé côté disque terminal est conçu comme un segment de cadre (8) qui pénètre dans un évidement associé (9) sur le cadre (3).

4. Élément de filtre annulaire selon la revendication 1, **caractérisé en ce que**
- un collet (12) s'écartant en direction du cadre (3) et comportant une fente axiale (13) est agencé sur le disque terminal inférieur (5),
- une nervure (14) se dressant de façon radiale vers l'intérieur et pénétrant, lorsque l'élément de filtre annulaire (1) est monté, dans la fente axiale (13) du collet (12) côté disque terminal est conçu sur le cadre (3).

5. Élément de filtre annulaire selon l'une des revendications 1 à 4, **caractérisé en ce qu'**une lèvre d'étanchéité (22) pénétrant dans le cadre (3) de façon à assurer l'étanchéité est agencée sur le disque terminal inférieur (5).

6. Dispositif de filtre (18), notamment filtre à huile ou à carburant, avec un carter de filtre qui comporte un corps de carter de filtre (19) et un couvercle de carter de filtre et dans lequel un élément de filtre annulaire (1) selon l'une des revendications précédentes est agencé,
- l'élément de filtre annulaire (1) pénétrant avec sa broche (6) qui s'écarte de façon axiale, lorsque le dispositif de filtre (18) est monté, dans un canal (15) situé du côté du corps de carter de filtre,
- un dôme (16) en forme de tube étant prévu sur le corps de carter de filtre (19), lequel dôme pénètre, lorsque le dispositif de filtre (1) est monté, dans un espace intérieur de l'élément de filtre annulaire (1),
- un contour de guidage (17) étant prévu à une extrémité libre du dôme (16) en forme de tube, lequel contour de guidage coopère avec l'élément de guidage (7) agencé sur l'élément de filtre annulaire (1).

7. Dispositif de filtre selon la revendication 6, **caractérisé en ce que** le contour de guidage (17) côté dôme comporte une rainure axiale (20) vers laquelle l'élément de guidage (7) est guidé lors du montage du dispositif de filtre (18) et qui est agencé de telle manière par rapport à la broche (6) que celle-ci peut être introduite dans le canal (15) côté corps de carter de filtre dans la mesure où l'élément de guidage (7) pénètre dans la rainure axiale (20).

8. Dispositif de filtre selon la revendication 6 ou 7, **caractérisé en ce que** l'élément de guidage (7) est conçu comme une broche de guidage orientée de façon radiale vers l'intérieur.

9. Dispositif de filtre selon la revendication 7 ou 8, **caractérisé en ce que**
- le contour de guidage (17) est conçu à la manière d'une rampe circulaire, la rainure axiale (20) étant agencée entre le point le plus haut et le point le plus bas de la rampe,
- le contour de guidage (17) est conçu à la manière d'une canule biseautée, la rainure axiale (20) étant agencée au point le plus bas.
